(19) Europäisches Patentamt
European Patent Office
Office européen des brevets

(11) **EP 2 259 013 B1**

## (12) EUROPÄISCHE PATENTSCHRIFT

(45) Veröffentlichungstag und Bekanntmachung des Hinweises auf die Patenterteilung:
**20.11.2013 Patentblatt 2013/47**

(51) Int Cl.:
***G01B 11/25*** *(2006.01)*

(21) Anmeldenummer: **09006980.8**

(22) Anmeldetag: **25.05.2009**

(54) **Topographische Messung eines Objekts**

Topographical measurement of an object

Mesure topographique d'un objet

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**08.12.2010 Patentblatt 2010/49**

(73) Patentinhaber: **Siemens Aktiengesellschaft**
**80333 München (DE)**

(72) Erfinder:
• **Forster, Frank Dr.**
**81739 München (DE)**
• **Wissmann, Patrick**
**81677 München (DE)**

(56) Entgegenhaltungen:
**DE-A1- 10 321 883          DE-A1-102004 035 102
DE-A1-102007 022 361**

• **S. ZHANG, D. ROYER, S-T. YAU: "High-Resolution, Real-Time 3-D Absolute Coordinates Measurement Using a Fast Three-Step Phase-Shifting Algorithm" PROC. OF SPIE; INTERFEROMETRY XIII: TECHNIQUES AND ANALYSIS, Bd. 6292, 2006, Seiten 6292M-1-6292M-9, XP040228113**
• **SALVI J ET AL: "Pattern codification strategies in structured light systems" PATTERN RECOGNITION, ELSEVIER, GB, Bd. 37, Nr. 4, 1. April 2004 (2004-04-01), Seiten 827-849, XP004491495 ISSN: 0031-3203**

EP 2 259 013 B1

**Beschreibung**

Die Erfindung betrifft ein Verfahren sowie eine Vorrichtung zur topographischen Messung eines Objekts. Bei einem solchen Verfahren wird eine Sequenz aus mehreren Messmustern auf das Objekt projiziert.

Die EP 1 505 367 A2 beschreibt ein Verfahren zur Bestimmung einer Achsgeometrie und einen Sensor zu dessen Durchführung. Zur Bestimmung der Achsgeometrie durch Aufnahme und Auswertung eines topographischen Bildes der Stirnseite eines auf einer Achse angebrachten Rades wird dabei folgendermaßen vorgegangen:

- 　flächige Projizierung von Licht mit einer flächigen Codierung auf die Stirnseite des Rades,
- 　flächige Aufnahme des von der Stirnseite des Rades reflektierten Lichtes aus einer anderen Richtung als der Licht-Projektionsrichtung durch einen Bildwandler,
- 　Ermittlung von dreidimensionalen Oberflächenkoordinaten für das topographische Bild der Stirnseite des Rades aus den Lichtsignalen, und
- 　Auswertung des topographischen Bildes in Bezug auf ein Referenzsystem.

Die DE 10 2004 035 102 beschreibt ein Verfahren zur eindeutigen topographischen Vermessung, bei dem die Phasenverschiebetechnik zeitgleich mit der Projektion eines kodierten Musters kombiniert wird, wobei die Projektionen durch verschiedene Farbkanäle getrennt sind. In der DE 103 21 883 wird ein periodisches Muster mit einem Muster einer anderen Periode überlagert, so dass auch hier der Eindeutigkeitsbereich der topographischen Messung vergrößert wird. Einen Überblick über ähnliche Verfahren bietet Salvi et al. in "Pattern codification strategies in structured light systems", PATTERN RECOGNITION, ELSEVIER, GB, Bd. 37, Nr. 4 vom 1. April 2004.

Der Erfindung liegt die Aufgabe zugrunde, die topographische Messung eines Objektes zu verbessern, insbesondere zu beschleunigen.

Diese Aufgabe wird gelöst durch ein Verfahren zur topographischen Messung eines Objekts, bei welchem Verfahren eine Se- ' quenz aus mehreren Messmustern auf das Objekt projiziert wird, wobei ein Messmuster jeweils ein mit einer Wertesequenz periodisch moduliertes Phasenschiebemuster beinhaltet, wobei die Phasenschiebemuster eine Phasenverschiebung gegeneinander aufweisen, wobei die Wertesequenzen ortsfest gegeneinander sind, und bei welchem Verfahren die auf das Objekt projizierten Messmuster erfasst und ausgewertet werden, wobei die Phasenverschiebung der Phasenschiebemuster und die Modulation mit den Wertesequenzen derart gewählt werden, dass Anteile der Phasenschiebemuster und der Wertesequenzen aus dem projizierten Messmustern unabhängig voneinander auswertbar sind.

Diese Aufgabe wird gelöst durch eine Vorrichtung zur topographischen Messung eines Objekts, mit mindestens einem Projektionsmittel zur Projektion einer Sequenz aus mehreren Messmustern auf das Objekt, wobei ein Messmuster jeweils ein mit einer Wertesequenz moduliertes periodisch moduliertes Phasenschiebemuster beinhaltet, wobei die Phasenschiebemuster eine Phasenverschiebung gegeneinander aufweisen, wobei die Wertesequenzen ortsfest gegeneinander sind, und mit Mitteln zur Erfassung und mit Mitteln zur Auswertung der auf das Objekt projizierten Messmuster, wobei die Phasenverschiebung der Phasenschiebemuster und die Modulation mit den Wertesequenzen derart gewählt sind, dass Anteile der Phasenschiebemuster und der Wertesequenzen aus den projizierten Messmustern unabhängig voneinander auswertbar sind.

Der Erfindung beruht auf der Idee, einem klassischen periodisch modulierten Phasenschiebemuster eine Wertesequenz zu überlagern, welche nach der Erfassung der Messmuster unabhängig von dem periodisch modulierten Phasenschiebemuster auswertbar ist. Trotz der Möglichkeit der getrennten Auswertung müssen die periodisch modulierten Phasenschiebemuster und die Wertesequenzen jedoch nicht getrennt projiziert werden. Da die Messmuster zeitlich sequentiell projiziert werden, können somit gegenüber aus dem Stand der Technik bekannten Verfahren die relevanten Informationen mit entsprechend weniger Messmustern projiziert werden. Damit ist das erfindungsgemäße Verfahren deutlich schneller ausführbar.

Vorteilhafte Ausgestaltungen der erfindungsgemäßen Maschine gehen aus den abhängigen Ansprüchen hervor.

Gemäß einer vorteilhaften Ausgestaltung der Erfindung sind mindestens zwei der Wertesequenzen vorzeichenalternierend, d. h. mindestens zwei der Wertesequenzen sind mit unterschiedlichem Vorzeichen moduliert. Dies bietet den Vorteil, dass bei einer Auswertung der projizierten Messmuster entsprechend vorzeichenalternierend modulierte Wertesequenzen bei einer einfachen Addition der projizierten Messmuster sich gegenseitig herauslöschen bzw. bei einer einfachen Subtraktion der Messmuster sich gegenseitig verstärken. Damit sind die vorzeichenalternierend modulierten Wertesequenzen besonders einfach auswertbar.

Um die Anzahl der zu projizierenden Messmuster möglichst gering zu halten, wird gemäß einer weiteren vorteilhaften Ausgestaltung der Erfindung vorgeschlagen, dass die Sequenz vier Messmuster aufweist, wobei die periodisch modulierten Phasenschiebemuster der vier Messmuster jeweils um eine Viertel Periodenlänge zueinander phasenverschoben sind.

Gemäß einer weiteren vorteilhaften Ausgestaltung der Erfindung besitzen die Wertesequenzen die Eigenschaft der Eindeutigkeit einer beliebigen Teilsequenz, wenn die Länge der Teilsequenz mindestens der Länge eines entsprechenden Eindeutigkeitsfensters entspricht. Je nach Anzahl der zur Verfügung stehenden Wertestufen einer Wertesequenz lässt sich somit die Länge der Teilsequenz bestimmen, welche erforderlich ist, um Eindeutigkeit herzustellen.

Um die im jeweiligen Anwendungsfall erforderliche Redundanz herzustellen, wird gemäß einer weiteren vorteilhaften Ausgestaltung der Erfindung vorgeschlagen, dass die Wertesequenz eine Codesequenz mit einzelnen Codewörtern ist, wobei die einzelnen Codewörter untereinander eine minimale Hamming-Distanz größer 1 aufweisen. Damit ist zumindest Fehlererkennung gewährleistet, bei einer Hamming-Distanz größer 2 auch eine Fehlerkorrektur. Es kann somit die gewünschte Fehlertoleranz erreicht werden.

Vorteilhafterweise sind die periodisch modulierten Phasenschiebemuster gemäß einer weiteren Ausgestaltung der Erfindung sinusförmig moduliert.

Um eventuelle Fehlstellen in den mittels des Verfahrens gewonnenen Tiefenkarten, z. B. infolge von Über- bzw. Unterbelichtung oder nicht eindeutig decodierbaren Symbolfolgen, ergänzen zu können, erfolgt gemäß einer weiteren vorteilhaften Ausgestaltung der Erfindung die Erfassung der auf das Objekt projizierten Messmuster mit mehreren Bildwandlern, wobei die Auswertung der auf das Objekt projizierten Messmuster mittels eines stereoskopischen Verfahrens erfolgt, wobei die Anteile der Wertesequenzen zur Korrespondenzsuche verwendet werden. Dazu kann je Bildwandler für jeden Bildpunkt ohne Tiefenwert ein korrespondierender Bildpunkt oder eine korrespondierende Bildpunktumgebung in den verbleibenden Bildwandlern gesucht werden. Bei der Korrespondenzsuche kann somit als Ergänzung zu klassischen photometrischen Stereoverfahren die darunter liegende Wertesequenz genutzt werden.

Nachfolgend wird die Erfindung anhand der in den Figuren dargestellten Ausführungsbeispiele näher beschrieben und erläutert.

Es zeigen:

FIG 1     eine Vorrichtung zur topographischen Messung eines Objekts in schematischer Darstellung,

FIG 2     ein mit einem Messmuster beleuchtetes Objekt, sowie erfasste und ausgewertete Messmuster,

FIG 3     Beispiele einer Mustersequenz, und

FIG 4     eine Vorrichtung zur topographischen Messung eines Objekt mit mehreren Bildwandlern.

Die Erfindung verringert die Anzahl an Bildaufnahmen, die für eine topographische Messung (sogenannte Profilometrie) mittels klassischem Phasenschiebeverfahren nach dem Stand der Technik mindestens notwendig ist. Die Verringerung der Anzahl an Bildaufnahmen ermöglicht die Nutzung zahlreicher Vorzüge des Phasenschiebeverfahrens gegenüber anderen Verfahren der strukturierten Beleuchtung, insbesondere für zeitkritische Anwendungen wie der mobilen, freihand geführten Profilometrie. Gegenüber dem Stand der Technik beträgt die Verkürzung der Messzeit durch Einsparung von Bildaufnahmen mindestens ein Drittel.

Es existieren Ansätze zur Verkürzung der Bildsequenz, diese unterscheiden sich jedoch wesentlich von klassischen Phasenschiebetechniken, sowohl in Bezug auf die Qualität der Messergebnisse als auch auf den technischen Aufwand zur Durchführung der Messung. Hierzu zählen die Verfahren der Fourier-Transformations-Profilometrie, wobei mehrere Phasenschiebebilder in einem hybriden Bild vereint und bei der Auswertung mittels Frequenzfilter getrennt werden. Diese Verfahren garantieren im Gegensatz zur vorliegenden Erfindung nicht die Unversehrtheit des Phasenbildes, da die Objekttextur das Spektrum der projizierten Frequenzen erweitert. Zusätzlich ist auch die Verkürzung der Bildsequenz mittels chromatischer Codierung möglich, wobei erhebliche Sonderanforderungen an die Hardware zur Messbeleuchtung (schmalbandige, z. B. bichromatische Projektion) und Bildaufnahme entstehen.

Phasenschiebeverfahren werden in einer Vielzahl von kommerziell verfügbaren optischen Profilometern angewandt. Allen nach diesen Verfahren arbeitenden Profilometern liegt zugrunde, dass eine Messmustersequenz von mindestens drei zueinander phasenverschobenen eindimensional periodischen Mustern (z. B. sinusförmigen Mustern) auf die zu vermessende Oberfläche projiziert und durch mindestens eine Kamera aufgenommen wird. Diese mindestens drei Kamerabilder werden mittels eines geschlossenen mathematischen Ausdrucks in ein sogenanntes Phasenbild überführt. Dieses Phasenbild erlaubt für jedes die Messbeleuchtung erfassende Kamerapixel den Rückschluss auf die beleuchtende Pixelspalte (oder -zeile) des Messmusterprojektors, innerhalb der Periodizität des Messmusters. Beispielsweise kann bei einem Messmuster mit n Perioden jede im Phasenbild errechnete Phase bis zu n-mal vorkommen, d. h. eine ermittelte Phase kann auf bis zu n beleuchtende Pixelspalten (oder -zeilen) des Messmusterprojektors hindeuten. Aufgrund der Mehrdeutigkeit des Phasenbildes ist nach dem Stand der Technik die Aufnahme einer zusätzlichen Mustersequenz zur Herstellung eines eindeutigen Zusammenhangs zwischen Kamerapixel und beleuchtender Projektorzeile oder Projektorspalte notwendig. Erst wenn dieser Zusammenhang eindeutig hergestellt ist, kann mittels Triangulation eine Tiefenkarte der zu vermessenden Oberfläche ermittelt werden. Nach dem Stand der Technik wird zu diesem Zweck meist eine zusätzliche Sequenz aufgenommen, die ausschließlich der Herstellung der Eindeutigkeit des Phasenbildes dient. Häufig wird bei kommerziell verfügbaren Profilometern die sogenannte Gray-Code-Sequenz eingesetzt, wobei die Anzahl an notwendigen Bildaufnahmen dem aufgerundeten, binären Logarithmus der Anzahl der Perioden im Messmuster entspricht. Beispielsweise ist für die Herstellung der Eindeutigkeit über 128 Perioden im Messmuster die Aufnahme einer Sequenz von 7 Gray-Code Mustern notwendig. Diese Aufnahmen und die darin investierte Messzeit dienen nicht der Steigerung der Messgenauigkeit, sondern ausschließlich der Herstellung der Eindeutigkeit des Phasenbildes.

Ein weiteres im Stand der Technik verbreitetes Verfahren zur Herstellung der Eindeutigkeit liegt in der Ermittlung eines weiteren Phasenbildes durch eine zweite Messmustersequenz mit teilerfremder Musterperiode. Das sogenannte Mehrwellenlängenverfahren ist gegenüber dem erstgenannten vorteilhaft, da nur mindestens drei Messaufnahmen zusätzlich notwendig sind und das zweite Phasenbild durch geeignete Verarbeitung zur Steigerung der Genauigkeit der Messung genutzt werden kann.

Allgemein ist eine Vielzahl anderer Ansätze mit dem Ziel der Herstellung von Eindeutigkeit im Phasenbild bekannt. Diese beschränken sich jedoch auf die Aufnahme zusätzlicher Einzelbilder oder Bildsequenzen. Diese Ansätze sind, vermutlich aufgrund von Nachteilen wie der schlechten Decodierbarkeit, der Notwendigkeit von Farbkameras oder zusätzlichem Aufwand seitens der Projektionseinheit, im kommerziellen verfügbaren Stand der Technik nicht anzutreffen.

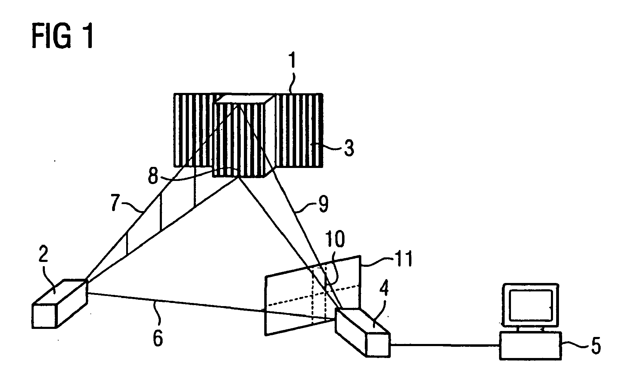

FIG 1 zeigt eine Vorrichtung zur topographischen Messung eines Objekts 1 gemäß einem Ausführungsbeispiel der Erfindung. Die Vorrichtung weist Projektionsmittel 2 zur Projektion einer Sequenz aus mehreren Messmustern 3 auf das Objekt 1 auf. Des Weiteren weist die Vorrichtung Mittel zur Erfassung 4 und Mittel zur Auswertung 5 der auf das Objekt 1 projizierten Messmuster 3 auf. Sowohl die Projektionsmittel 2 als auch die Mittel zur Erfassung 4 befinden sich auf einer gemeinsamen Basis 6, d. h. ihre räumliche Zuordnung zueinander ist bekannt. Die Projektionsmittel 2 projizieren Strahlenbündel 7 auf das Objekt 1, welche auf dem Objekt 1 als Messmuster 3 abgebildet werden. Mit dem Bezugszeichen 8 ist eine Teilsequenz 8 des projizierten Messmusters 3 bezeichnet, in diesem Fall ein Streifen eines Streifenmusters mit der Streifenphase $\phi$ und dem Streifenindex i. Das abgebildete Messmuster 3 wird durch die Mittel zur Erfassung 4 auf einer Abbildungsebene 11 abgebildet. Das Teilsegment 8 des Messmusters 3 wird in diesem Fall als Linie 10 abgebildet. Die Erfassung des Messmusters 3 erfolgt über ein von dem Objekt 1 reflektiertes Strahlenbündel 9.

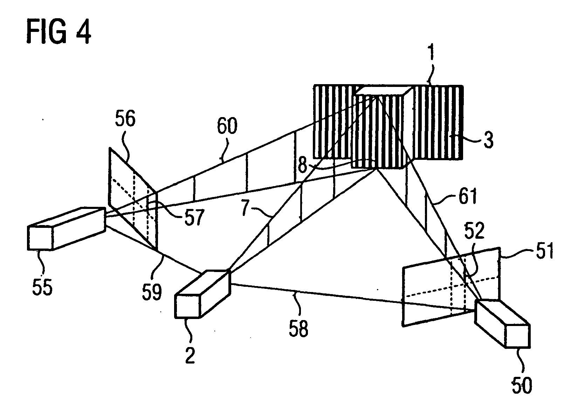

Mit anderen Worten weist die Vorrichtung somit mindestens eine Vorrichtung zur Beleuchtung des Messobjekts mit der codierten Mustersequenz und mindestens einen Bildwandlers zur Aufnahme der Messszene auf. Optional sind mehrere Bildwandler zur Aufnahme der Messszene (siehe FIG 4). Zusätzlich wird eine Vorrichtung zur Verarbeitung der Bilddaten benötigt (z. B. PC), insbesondere zur Decodierung der Codesequenz und zur Berechnung des Phasenbildes, in FIG 1 als Mittel zur Auswertung 5 dargestellt.

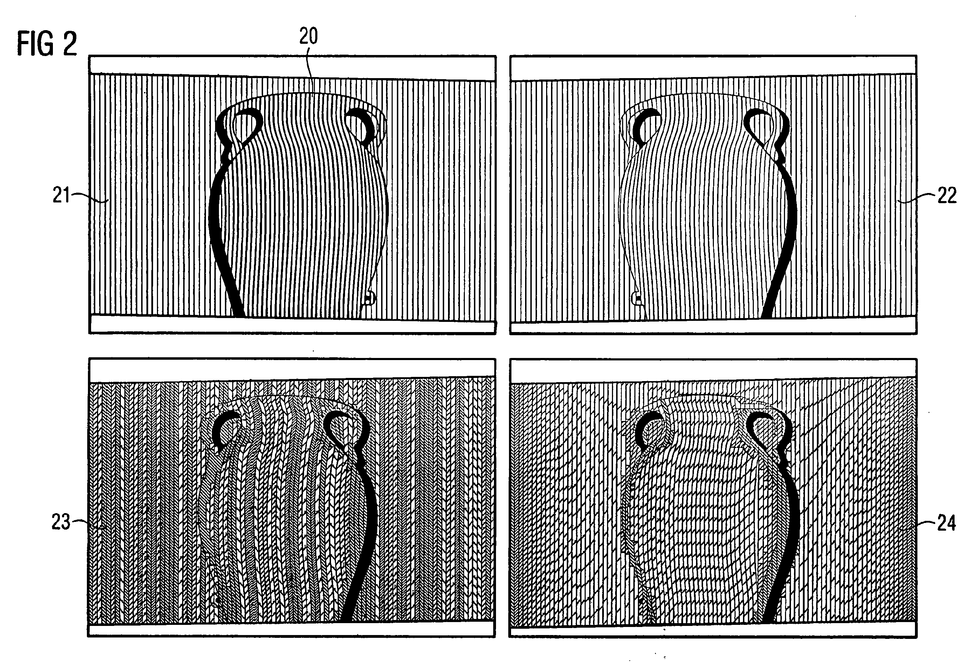

FIG 2 zeigt ein mit einem Messmuster 21 beleuchtetes Objekt 20, sowie erfasste und ausgewertete Messmuster 22, 23, 24. Dabei wird das Objekt 20 mit einem Streifenmuster 21 beleuchtet. Das dargestellte Streifenmuster 21 stellt in diesem Fall eines von mehreren Phasenschiebemustern dar. Durch die Erfassung und Auswertung von mehreren solchen in der Phase gegeneinander verschobenen Phasenschiebemustern entsteht ein mehrdeutiges Phasenbild 22. Dieses mehrdeutige Phasenbild 22 lässt sich aus den einzelnen projizierten und erfassten Phasenbildern 21 bestimmen. Ebenso lässt sich gemäß dem hier gezeigten Ausführungsbeispiel der Erfindung ein Codierungsbild 23 bestimmen, welches die ortsfeste Wertesequenz, welche auf das Objekt 20 projiziert wird, wiedergibt. Durch die Verrechnung des mehrdeutigen Phasenbildes 22 und des decodierten Codierungsbildes 23 ergibt sich ein eindeutiges Phasenbild 24 gemäß FIG 2.

Damit ergibt sich eine Vorrichtung zur topographischen Messung eines Objekts mit gegenüber dem Stand der Technik um mindestens ein Drittel verkürzter Messmustersequenz. Das oben beschriebene Problem der Herstellung der Eindeutigkeit des Phasenbildes wird durch ein neuartiges Verfahren der Modulation einer insbesondere redundanten Wertesequenz in das Messmuster erreicht, die nach der Aufnahme der Messmustersequenz getrennt vom mehrdeutigen Phasenbild decodiert werden kann.

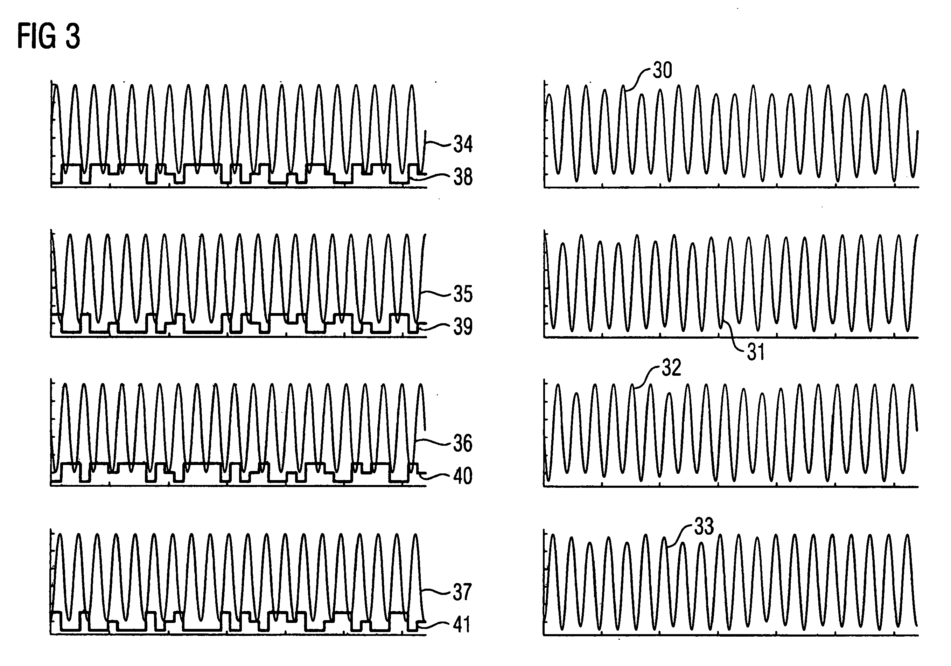

FIG 3 zeigt Beispiele einer Mustersequenz. In der linken Spalte von FIG 3 sind Querschnitte durch die Messmuster einer Phasenschiebesequenz mit vier Bildaufnahmen gezeigt. Dargestellt ist eine Sequenz aus mehreren Messmustern 30, 31, 32, 33, welche zeitlich sequentiell auf ein Objekt projiziert werden. Dabei beinhaltet ein Messmuster 30 bis 33 jeweils ein mit einer Wertesequenz 38, 39, 40, 41 moduliertes periodisch moduliertes Phasenschiebemuster 34, 35, 36 bzw. 37. Gemäß dem in FIG 3 dargestellten Ausführungsbeispiel sind die Phasenschiebemuster 34 bis 37 sinusförmig moduliert und weisen eine Phasenverschiebung von $\pi/2$, d. h. eine Viertelperiodenlänge, gegeneinander auf, d. h. die sinusförmige Modulation (entspricht der Helligkeit des projizierten Musters) wird dabei für jedes aufeinanderfolgende Bild um jeweils $\pi/2$ in der Phase verschoben.

Zusätzlich zu dieser sinusförmigen Modulation wird nun durch Amplitudenmodulation eine geeignete Wertesequenz 38 bis 41 mit dem Phasenschiebemuster überlagert. Die Modulation der Wertesequenz erfolgt dabei abwechselnd mit positivem und negativem Vorzeichen, wodurch die Trennung von periodischer und nicht-periodischer Modulation ermöglicht wird. Des Weiteren ist die Modulation der Wertesequenzen 38 bis 41 ortsfest, d. h. sie nimmt nicht an der Phasenverschiebung teil. Im dargestellten Ausführungsbeispiel sind die Wertesequenzen 38 und 40 bzw. 39 und 41 identisch. Zudem sind die Wertesequenzen 38 und 40 gegenüber den Wertesequenzen 39 bzw. 41 vorzeichenalternierend moduliert.

Die dargestellten Wertesequenzen 38 bis 41 besitzen die Eigenschaft der Eindeutigkeit einer beliebigen Teilsequenz, wenn die Länge der Teilsequenz mindestens der Länge eines entsprechenden Eindeutigkeitsfensters entspricht. Zum Beispiel kann bei einem Eindeutigkeitsfenster von fünf Symbolen die Position einer beliebigen Teilsequenz von mindestens fünf aufeinanderfolgenden Symbolen in der gesamten Sequenz bestimmt werden. Diese Eigenschaft wird beispielsweise von sogenannten De Bruijn-Sequenzen erfüllt. Zusätzlich ist es möglich, die Wertesequenz redundant auszuführen, so dass gegebenenfalls Fehler bei der Decodierung korrigiert werden können.

Die Modulation der Phasenschiebe-Mustersequenz kann grundsätzlich mit jeder beliebigen Wertesequenz erfolgen. Im Falle einer Wertesequenz C, bestehend aus den Symbolen [c1...cn] und aufgebaut aus dem Alphabet A mit den Symbolen [a1...an], besitzt C idealerweise ein garantiertes Eindeutigkeitsfenster, um die eindeutige Zuordnung von Streifenindizes zu einer korrekt identifizierten Symbolfolge (Wort W mit den Symbolen [w1...wn]) sicher zu stellen, wenn die Wortlänge mindestens der Breite des Eindeutigkeitsfensters entspricht. Diese Eigenschaft erfüllt z. B. eine De Bruijn-Sequenz. Fehlertoleranz kann z. B. durch Einhaltung eines Hamming-Abstands von mindestens 3 der Worte [W1...Wn] zueinander erreicht werden. Bei Einhaltung eines Hamming-Abstands von mindestens 2 ist keine Fehlerkorrektur möglich, jedoch können fehlerhaft dekodierte Worte als solche identifiziert werden.

Die Symbole des Alphabets A können grundsätzlich aus einem einzelnen oder einer Folge von Werten bestehen. Im Falle einer Folge von Werten ergeben sich zusätzliche Möglichkeiten bei der Auswertung des Codierungsbildes. Beispielsweise können in einem Alphabet als Symbole periodische Wertefolgen mit unterschiedlicher Periodenlänge (Frequenzcodierung) verwendet werden. Der erste Schritt der Demodulation findet dann auf herkömmlichem Weg durch Anwendung der unten angegebenen Gl. 2 statt, anschließend erfolgt eine Frequenzanalyse eines entsprechend segmentierten Bildbereichs zur Erkennung der Periodenlänge des gesuchten Symbols. Möglich ist auch eine nicht an codierte Symbole geknüpfte Ausführung der Modulation, beispielsweise als Wertesequenz in Form eines Graukeils, mehrerer Graukeile oder jeder beliebigen, den jeweiligen Zweck erfüllenden Funktion.

Die fertig codierte Mustersequenz ist in amplitudennormalisierter Form in der rechten Spalte dargestellt.

Die in der rechten Spalte dargestellte Sequenz der Messmuster 30 bis 33 ist das amplitudennormalisierte Resultat der mit den jeweiligen Wertesequenzen 38 bis 41 amplitudenmodulierten Phasenschiebemuster 34 bis 37.

Die Auswertung der auf das Objekt projizierten Messmuster erfolgt gemäß dem gezeigten Ausführungsbeispiel der Erfindung wie im Folgenden beschrieben. Durch Gleichungen 1 und 2 kann nach der Projektion und Aufnahme der Sequenz von vier Messmustern sowohl ein (mehrdeutiges) Phasenbild, als auch ein separates Codierungsbild errechnet werden:

$$\phi_{Phase}(x,y) = \arctan_2\left[I_3(x,y) - I_1(x,y), I_4(x,y) - I_2(x,y)\right] \qquad \text{Gl. 1}$$

$$W_{Code}(x,y) = \frac{I_2(x,y) + I_4(x,y) - I_1(x,y) - I_3(x,y)}{I_1(x,y) + I_2(x,y) + I_3(x,y) + I_4(x,y)} \qquad \text{Gl. 2}$$

Dabei ist besonders hervorzuheben, dass die Codierung der Messmuster bei idealer Intensitätskalibrierung des Projektors nicht das Phasenbild beeinflusst, das die wesentlichen profilometrischen Daten enthält. Wird Gl. 1 mit einem Beleuchtungsmodell unter Berücksichtigung der anwesenden Lichteinflüsse (Messbeleuchtung und Umgebungsbeleuchtung) sowie der Objektreflektivität umgeformt, verschwindet der Modulationsanteil aus dem resultierenden Phasenbild.

Im Gegensatz dazu ist das Codierungsbild vollständig frei von der periodischen Modulation des Phasenschiebemusters, was die erfolgreiche Decodierung erheblich erleichtert oder oft erst ermöglicht. Wird oben beschriebenes Beleuchtungsmodell zur Validierung verwendet, verbleibt nach Umformung von Gl. 2 ein von der periodischen Modulation freier Ausdruck, in den neben der Codesequenz lediglich der Term der Umgebungsbeleuchtung als skalierender Faktor bleibt. Der skalierende Faktor kann durch entsprechende Gestaltung der Codesequenz und Auswertung des Codierungsbildes nahezu neutralisiert werden.

Im darauffolgenden Schritt der Auswertung wird das Codierungsbild decodiert. Wurde für jede Periode des Phasenschiebemusters eine entsprechende Teilcodesequenz mit der Minimallänge des Eindeutigkeitsfensters identifiziert, ist die Eindeutigkeit des Phasenbildes hergestellt. Dieses ist die Voraussetzung für den Triangulationsschritt zur Erstellung der Tiefenkarte des Objekts 1.

FIG 4 zeigt eine Vorrichtung zur topographischen Messung eines Objekts 1 mit einem Projektionsmittel 2 zur Projektion einer Sequenz aus mehreren Messmustern 3 auf das Objekt 1. In dem in FIG 4 gezeigten Ausführungsbeispiel der Erfindung weisen die Mittel zur Erfassung der auf das Objekt 1 projizierten Messmuster 3 mehrere Bildwandler 50, 55 auf. Die Projektionsmittel 2 werfen ein Strahlenbündel 7 auf das Objekt 1, welches als Messmuster 3 auf dem Objekt 1 abgebildet wird. Mit dem Bezugzeichen 8 ist im dargestellten Beispiel eine Linie eines entsprechend projizierten Streifenmusters bezeichnet. Das auf dem Objekt abgebildete Messmuster 3 wird durch zwei Messwandler 50 bzw. 55 aus unterschiedlichen Raumwinkeln erfasst. Die Erfassung erfolgt über Strahlenbündel 60 bzw. 61. Somit wird der Streifen 8 in einer Bildebene 51 als Streifen 52 vom Bildwandler 50 bzw. in einer Bildebene 56 als Streifen 57 vom Bildwandler 55 abgebildet. Die bekannte räumliche Zuordnung zueinander zwischen Projektionsmittel 2 und den Mitteln zur Erfassung, d. h. den Bildwandlern 50 und 55, sind jeweils als Basis 58 bzw. als Basis 59 gekennzeichnet.

Wird die Erfindung gemäß FIG 4 mit mindestens zwei Bildwandlern, z. B. Kameras, ausgeführt, kann je Kamera ein mehrdeutiges Phasenbild und ein Codierungsbild ermittelt werden. Die abgeleiteten eindeutigen Phasenbilder können mittels Triangulation in je eine Tiefenkarte überführt werden. Eventuelle Fehlstellen in den Tiefenkarten (z. B. in Folge von Über-/ Unterbelichtung oder nicht eindeutig decodierbaren Symbolfolgen) können mittels stereoskopischer Verfahren ergänzt werden. Dazu wird je Kamera für jedes Pixel ohne Tiefenwert ein korrespondierendes Pixel oder eine korrespondierende Pixelumgebung in den verbleibenden Kameras gesucht. Bei der Korrespondenzsuche kann als Ergänzung zu klassischen photometrischen Stereoverfahren der darunter liegende Codierungswert des Codierungsbildes genutzt werden. Voraussetzung hierfür ist die Anwesenheit der Messbeleuchtung auf den relevanten Pixeln der untersuchten Kamerabilder.

Die gezeigten Ausführungsbeispiele der Erfindung zeigen ein Phasenschiebe-Profilometer mit hybrider Messmustersequenz. Insbesondere wird die Projektion von vier periodisch modulierten, zueinander phasenverschobenen Mustern mit einer ortsfesten Wertesequenz unter Benutzung eines speziellen Modulations- und Demodulationsverfahren beschrieben, das die störungsfreie Extraktion zweier separater Bilder (Phasenbild und Codierungsbild) aus der Messsequenz erlaubt. Gegenüber dem Stand der Technik ergibt sich damit eine von sechs auf vier Bilder verkürzte Messmustersequenz bzw. eine um 33 % verkürzte minimale Messdauer. Aufgrund der kurzen Messdauer ergibt sich somit insbesondere die Eignung für eine freihand geführte Messung.

Durch Nutzung einer redundanten (fehlertoleranten) Wertesequenz, z. B. einer De Bruijn-Sequenz mit Hamming-Abstand > 1 ergibt sich eine hohe Robustheit der Decodierung, sowie die Möglichkeit zur Erkennung und Korrektur unsicherer/ fehlergefährdeter Messbereiche (z. B. bei Mehrfachreflexion) durch Codierung.

Zusammenfassend betrifft die Erfindung somit ein Verfahren und eine Vorrichtung zur topographischen Messung eines Objekts 1. Um die topographische Messung des Objekts 1 zu verbessern, insbesondere zu beschleunigen, weist die erfindungsgemäße Vorrichtung mindestens ein Projektionsmittel 2 zur Projektion einer Sequenz aus mehreren Messmustern 3 auf das Objekt 1 auf, wobei ein Messmuster 3 jeweils ein mit einer Wertesequenz moduliertes periodisch moduliertes Phasenschiebemuster beinhaltet, wobei die Phasenschiebemuster eine Phasenverschiebung gegeneinander aufweisen, wobei die Wertesequenzen ortsfest gegeneinander sind, und mit Mitteln zur Erfassung 4 und mit Mitteln zur Auswertung 5 der auf das Objekt 1 projizierten Messmuster 3, wobei die Phasenverschiebung der Phasenschiebemuster und die Modulation mit den Wertesequenzen derart gewählt sind, dass Anteile der Phasenschiebemuster und der Wertesequenzen aus den projizierten Messmustern 3 unabhängig voneinander auswertbar sind.

## Patentansprüche

1. Verfahren zur topographischen Messung eines Objekts (1), bei welchem Verfahren eine Sequenz aus mehreren Messmustern (3) auf das Objekt (1) projiziert wird, wobei ein Messmuster (3) jeweils ein mit einer Wertesequenz moduliertes periodisch moduliertes Phasenschiebemuster beinhaltet, wobei die Phasenschiebemuster eine Phasenverschiebung gegeneinander aufweisen, wobei die Wertesequenzen ortsfest gegeneinander sind, und bei welchem Verfahren die auf das Objekt (1) projizierten Messmuster (3) erfasst und ausgewertet werden, wobei die Phasenverschiebung der Phasenschiebemuster und die Modulation mit den Wertesequenzen derart gewählt werden, dass Anteile der Phasenschiebemuster und der Wertesequenzen aus den projizierten Messmustern (3) unabhängig voneinander auswertbar sind.

2. Verfahren nach Anspruch 1, **dadurch gekennzeichnet, dass** mindestens zwei der Wertesequenzen vorzeichenalternierend moduliert sind.

3. Verfahren nach Anspruch 1 oder 2, **dadurch gekennzeichnet, dass** die Sequenz vier Messmuster (3) aufweist, wobei die periodisch modulierten Phasenschiebemuster der vier Messmuster (3) jeweils um eine Viertel Periodenlänge zueinander phasenverschoben sind.

4. Verfahren nach einem der vorhergehenden Ansprüche, **dadurch gekennzeichnet, dass** die Wertesequenzen die Eigenschaft der Eindeutigkeit einer beliebigen Teilsequenz besitzen, wenn die Länge der Teilsequenz mindestens der Länge eines entsprechenden Eindeutigkeitsfensters entspricht.

**5.** Verfahren nach einem der vorhergehenden Ansprüche, **dadurch gekennzeichnet, dass** die Wertesequenz eine Codesequenz mit einzelnen Codewörtern ist, wobei die einzelnen Codewörter untereinander eine minimale Hamming-Distanz größer 1 aufweisen.

**6.** Verfahren nach einem der vorhergehenden Ansprüche, **dadurch gekennzeichnet, dass** die periodisch modulierten Phasenschiebemuster sinusförmig moduliert sind.

**7.** Verfahren nach einem der vorhergehenden Ansprüche, **dadurch gekennzeichnet, dass** die Erfassung der auf das Objekt (1) projizierten Messmuster (3) mit mehreren Bildwandlern (50,55) erfolgt, wobei die Auswertung der auf das Objekt (1) projizierten Messmuster (3) mittels eines stereoskopischen Verfahrens erfolgt, wobei die Anteile der Wertesequenzen zur Korrespondenzsuche verwendet werden.

**8.** Vorrichtung zur topographischen Messung eines Objekts (1), mit mindestens einem Projektionsmittel (2), eingerichtet zur Projektion einer Sequenz aus mehreren Messmustern (3) auf das Objekt (1), wobei ein Messmuster (3) jeweils ein mit einer Wertesequenz moduliertes periodisch moduliertes Phasenschiebemuster beinhaltet, wobei die Phasenschiebemuster eine Phasenverschiebung gegeneinander aufweisen, wobei die Wertesequenzen ortsfest gegeneinander sind, und mit Mitteln zur Erfassung (4) und mit Mitteln zur Auswertung (5) der auf das Objekt (1) projizierten Messmuster (3), wobei die Phasenverschiebung der Phasenschiebemuster und die Modulation mit den Wertesequenzen derart gewählt sind, dass Anteile der Phasenschiebemuster und der Wertesequenzen aus den projizierten Messmustern (3) unabhängig voneinander durch die dazu eingerichteten Mittel zur Auswertung (5) auswertbar sind.

**9.** Vorrichtung nach Anspruch 8, **dadurch gekennzeichnet, dass** zumindest die Projektionsmittel (2) und die Mittel zur Erfassung (4) der auf das Objekt (1) projizierten Messmuster (3) als mobile, tragbare Einheit ausgeführt sind.

**10.** Vorrichtung nach Anspruch 8 oder 9, **dadurch gekennzeichnet, dass** die Mittel zur Erfassung (4) der auf das Objekt (1) projizierten Messmuster (3) mehrere Bildwandler (50, 55) aufweisen.


**Claims**

**1.** Method for topographic measurement of an object (1), in which method a sequence is projected from a plurality of measurement patterns (3) onto the object (1), a measurement pattern (3) respectively including a periodically modulated phase shift pattern modulated with a value sequence, the phase shift patterns having a phase shift with respect to one another, the value sequences being fixed in position relative to one another, and in which method the measurement patterns (3) projected onto the object (1) are detected and evaluated, the phase shift of the phase shift patterns, and the modulation with the value sequences being selected in such a way that components of the phase shift patterns and of the value sequences from the projected measurement patterns (3) can be evaluated independently of one another.

**2.** Method according to Claim 1, **characterized in that** at least two of the value sequences are modulated in signalternating fashion.

**3.** Method according to Claim 1 or 2, **characterized in that** the sequence has four measurement patterns (3), the periodically modulated phase shift patterns of the four measurement patterns (3) respectively being phase shifted relative to one another by a quarter period length.

**4.** Method according to one of the preceding claims, **characterized in that** the value sequences have the property of the uniqueness of an arbitrary partial sequence when the length of the partial sequence corresponds at least to the length of a corresponding uniqueness window.

**5.** Method according to one of the preceding claims, **characterized in that** the value sequence is a code sequence with individual code words, the individual code words having a minimum Hamming distance from one another of greater than 1.

**6.** Method according to one of the preceding claims, **characterized in that** the periodically modulated phase shift patterns are sinusoidally modulated.

7. Method according to one of the preceding claims, **characterized in that** the detection of the measurement patterns (3) projected onto the object (1) is performed with the aid of a plurality of image transducers (50, 55), the evaluation of the measurement patterns (3) projected onto the object (1) being performed by means of a stereoscopic method, the components of the value sequences being used for correspondence searching.

8. Device for topographic measurement of an object (1), having at least one projection means (2) set up to project a sequence from a plurality of measurement patterns (3) onto the object (1), a measurement pattern (3) respectively including a periodically modulated phase shift pattern modulated with a value sequence, the phase shift patterns having a phase shift with respect to one another, the value sequences being fixed in position relative to one another, and having means for detecting (4) and having means for evaluating (5) the measurement patterns (3) projected onto the object (1), the phase shift of the phase shift patterns, and the modulation with the value sequences being selected in such a way that components of the phase shift patterns and of the value sequences from the projected measurement patterns (3) can be evaluated independently of one another by the means for evaluation (5) set up for this purpose.

9. Device according to Claim 8, **characterized in that** at least the projection means (2) and the means for detecting (4) the measurement patterns (3) projected onto the object (1) are designed as a mobile, portable unit.

10. Device according to Claim 8 or 9, **characterized in that** the means for detecting (4) the measurement patterns (3) projected onto the object (1) have a plurality of image transducers (50, 55).


**Revendications**

1. Procédé de mesure topographique d'un objet ( 1 ), procédé dans lequel on projette sur l'objet ( 1 ) une séquence composée de plusieurs motifs ( 3 ) de mesure, un motif ( 3 ) de mesure contenant respectivement un motif de déphasage modulé périodiquement et modulé par une séquence de valeurs, les motifs de déphasage ayant mutuellement un déphasage, les séquences de valeurs étant les unes par rapport aux autres fixes en localisation et procédé dans lequel on détecte et on exploite les motifs ( 3 ) de mesure projetés sur l'objet ( 1 ), les déphasages des motifs de déphasage et la modulation par les séquences de valeurs étant choisis de manière à pouvoir exploiter, indépendamment les unes des autres, des parties des motifs de déphasage et des séquences de valeurs, à partir des modules ( 3 ) de mesure projetés.

2. Procédé suivant la revendication 1, **caractérisé en ce que** l'on module, avec alternance de signes, au moins deux des séquences de valeurs.

3. Procédé suivant la revendication 1 ou 2, **caractérisé en ce que** la séquence a quatre motifs ( 3 ) de mesure, les motifs déphasés et modulés périodiquement des quatre motifs ( 3 ) de mesure étant déphasés les uns par rapport aux autres, respectivement d'un quart de longueur d'onde.

4. Procédé suivant l'une des revendications précédentes, **caractérisé en ce que** les séquences de valeurs ont la propriété d'univocité d'une sous-séquence quelconque, si la longueur de la sous séquence correspond au moins à la longueur d'une fenêtre d'univocité correspondante.

5. Procédé suivant l'une des revendications précédentes, **caractérisé en ce que** la séquence de valeurs est une séquence de codes ayant des mots de code individuels, les mots de code individuels ayant entre eux une distance minimum de Hamming supérieure à 1.

6. Procédé suivant l'une des revendications précédentes, **caractérisé en ce que** les motifs de déphasage modulés périodiquement sont modulés sinusoïdalement.

7. Procédé suivant l'une des revendications précédentes, **caractérisé en ce que** l'on effectue la détection des motifs ( 3 ) de mesure projetés sur l'objet ( 1 ) par plusieurs convertisseurs ( 50, 55 ) d'image, l'exploitation des motifs ( 3 ) de mesure projetés sur l'objet ( 1 ) s'effectuant au moyen d'un procédé stéréoscopique en utilisant les parties des séquences de valeurs pour la recherche de correspondance.

**8.** Dispositif de mesure topographique d'un objet ( 1 ), comprenant au moins un moyen ( 2 ) de projection, conçu pour la projection d'une séquence composée de plusieurs motifs ( 3 ) de mesure sur l'objet ( 1 ), un motif ( 3 ) de mesure contenant respectivement un motif de déphasage modulé périodiquement et modulé par une séquence de valeurs, les motifs de déphasage ayant entre eux un déphasage, les séquences de valeurs étant fixes en localisation les unes par rapport aux autres et comprenant des moyens de détection ( 4 ) et des moyens d'exploitation ( 5 ) des motifs ( 3 ) de mesure projetés sur l'objet ( 1 ), le déphasage des motifs de déphasage et la modulation par les séquences de valeurs étant choisis de manière à pouvoir exploiter, par les moyens d'exploitation ( 5 ) conçus à cet effet, des parties des modèles de déphasage et des séquences de valeurs, à partir des motifs ( 3 ) de mesure projetés.

**9.** Dispositif suivant la revendication 8, **caractérisé en ce qu'**au moins les moyens ( 2 ) de projection et les moyens de détection ( 4 ) des motifs ( 3 ) de mesure projetés sur l'objet ( 1 ) sont réalisés sous la forme d'une unité mobile et portative.

**10.** Dispositif suivant la revendication 8 ou 9, **caractérisé en ce que** les moyens de détection ( 4 ) des motifs ( 3 ) de mesure projetés sur l'objet ( 1 ) ont plusieurs convertisseurs ( 50, 55 ) d'image.

# FIG 1

FIG 2

EP 2 259 013 B1

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1505367 A2
- DE 102004035102
- DE 10321883

**In der Beschreibung aufgeführte Nicht-Patentliteratur**

- Pattern codification strategies in structured light systems. **SALVI et al.** PATTERN RECOGNITION. ELSEVIER, 01. April 2004, vol. 37